# EUROPÄISCHE PATENTSCHRIFT

(11) **EP 2 240 342 B1**
(45) Veröffentlichungstag und Bekanntmachung des Hinweises auf die Patenterteilung: **13.04.2016**
(21) Anmeldenummer: 09708443.8
(22) Anmeldetag: 14.01.2009
(51) Int. Cl.: B60N 2/12, B60N 2/20, B60N 2/225, B60N 2/235, B60N 2/433

(54) **BESCHLAG FÜR EINEN FAHRZEUGSITZ**
FITTING FOR A VEHICLE SEAT
FERRURE POUR SIÈGE DE VÉHICULE

(30) Priorität: 08.02.2008 DE 102008008935
(43) Veröffentlichungstag der Anmeldung: 20.10.2010
(73) Patentinhaber: Johnson Controls Components GmbH & Co. KG, 67657 Kaiserslautern (DE)
(72) Erfinder: THIEL, Peter, 42899 Remscheid (DE)
(74) Vertreter: Liedtke, Markus
(86) Internationale Anmeldenummer: PCT/EP2009/000161
(87) Internationale Veröffentlichungsnummer: WO 2009/097949

(56) Entgegenhaltungen:
- EP-A- 0 872 375
- WO-A-2007/087876
- DE-U1-202005 012 733

## Beschreibung

Die Erfindung betrifft einen Beschlag für einen Fahrzeugsitz, insbesondere für einen Kraftfahrzeugsitz, mit den Merkmalen des Oberbegriffs des Anspruches 1.

Aus der WO 2007/087876 A1 ist ein Beschlag für ein zweitüriges Kraftfahrzeug bekannt, welcher einerseits mittels relativem Verdrehens eines Beschlagunterteils und eines mittleren Beschlagteils verschiedene Neigungseinstellungen der Lehne für den Gebrauch durch einen Insassen zur Verfügung stellt und andererseits mittels eines verriegelbaren Beschlagoberteils nach Entriegeln desselben durch das vorwärts erfolgende Freischwenken der Lehne samt Vorschieben des Fahrzeugsitzes den Zugang zum Fond zu ermöglichen. Um ein ungewolltes Zurückschwenken der Lehne, beispielsweise bei einer zu starken Polsterung im Übergangsbereich zwischen der Lehne und dem Sitzteil, zu verhindern, ist in der freigeschwenkten Stellung eine Festlegung des Beschlagoberteils - und damit der Lehne - mittels derjenigen Klinke vorgesehen, welche in den Gebrauchsstellungen das Beschlagoberteil mit dem mittleren Beschlagteil verriegelt. Diese Klinke legt das Beschlagoberteil an einem drehbaren Ring fest, so dass sie mittels des Längseinstellers des Fahrzeugsitzes zu öffnen ist.

Die DE 102 06 303 A1 zeigt einen Beschlag für ein zweitüriges Kraftfahrzeug, bei welchem das Verriegeln des Beschlagoberteils am mittleren Beschlagteil in den Gebrauchsstellungen und das Festlegen des Beschlagoberteils an einem Ring in der freigeschwenkten Stellung mit zwei verschiedenen Klinken erfolgt.

Ein weiterer Beschlag ist aus der DE 20 2005 012 733 U1 bekannt, welche einen Mechanismus aufweist, durch welchen eine Fixierung der Sitzlehne in einer vorgeklappten Position von zwei unabhängig voneinander betätigbaren Einrichtungen aufhebbar ist.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Die Festlegeklinke ist mittels des Längseinstellers des Fahrzeugsitzes automatisch zu öffnen, insbesondere wenn der Längseinsteller den Fahrzeugsitz in die zuvor eingestellte Sitzlängsposition bringt, welche von einer Memoryvorrichtung erkannt wird. Außerdem ist die Festlegeklinke manuell mittels des Freischwenk-Bedienelements zu öffnen, insbesondere in besonderen Situationen, wenn beispielsweise die zuvor eingestellte Sitzlängsposition nicht mehr erreicht wird. Die Festlegeklinke weist somit zwei alternative Möglichkeiten zum Öffnen auf. Eine von der eingestellten Neigung der Lehne unabhängige freigeschwenkte Stellung ergibt sich bei einer Festlegung des Beschlagoberteils am Beschlagunterteil.

Die Festlegeklinke wirkt zum Festlegen des Beschlagoberteils mit einem Anschlag zusammen. Der Anschlag ist fest mit dem Beschlagunterteil (und damit mit dem sitzteilfesten Beschlagteil des Einstellbeschlags) verbunden, beispielsweise indem er am Beschlagunterteil (oder einem daran befestigten Bauteil) angeformt (d.h. einstückig ausgebildet) oder gesondert ausgebildet und daran befestigt ist.

Der Einstellbeschlag weist vorzugsweise zwei Beschlagteile auf, die miteinander in Getriebeverbindung stehen, beispielsweise mittels eines selbsthemmenden Exzenterumlaufgetriebes, und die relativ zueinander verdrehbar sind. Zur Begrenzung der Neigungseinstellung sind der besagte Anschlag am Beschlagunterteil und ein mit dem Anschlag zusammenwirkendes Rastelement am Einstellbeschlag vorgesehen. Das Rastelement ist vorzugsweise fest mit dem nicht-sitzteilfesten Beschlagteil des Einstellbeschlags verbunden ist, beispielsweise indem es am nicht-sitzteilfesten Beschlagteil des Einstellbeschlags (oder einem daran befestigten Bauteil) angeformt (d.h. einstückig ausgebildet) oder gesondert ausgebildet und daran befestigt ist.
Anschlag und Rastelement sind vorzugsweise in beide Einstellrichtungen wirksam, beispielsweise durch entsprechend viele Anschlagflächen. Der Anschlag kann beispielsweise innerhalb einer Aussparung des Rastelements angeordnet sein. Genauer gesagt kann das Rastelement an einem Teil seines Umfangs eine radial nach innen versetzte, durch je eine Stufe begrenzte Aussparung aufweisen, innerhalb derer der - vorzugsweise axial vom Beschlagunterteil abstehende - Anschlag angeordnet wäre. Durch Zusammenwirken des Anschlags mit den Stufen des Rastelements wird der Winkel für die Neigungseinstellung der Lehne begrenzt.
Die Freischwenkeinheit weist vorzugsweise eine Verriegelungsvorrichtung auf mit einer Klinke zum Verriegeln des Beschlagoberteils in der Gebrauchsstellung, einem vorgespannten Spannelement zum Sichern der verriegelten Klinke im Normalfall und einem Fangelement zum Abstützen der Klinke im Crashfall. Die Klinke ist vorzugsweise schwenkbar am Beschlagoberteil angelenkt und verriegelt mit einem Rastelement der Freischwenkeinheit. Vorzugsweise ist dieses Rastelement zugleich jenes Rastelement, welches mit dem Anschlag zur Begrenzung der Neigungseinstellung zusammen wirkt. Die doppelte Funktion erspart ein weiteres Bauteil. Vorzugsweise ist ein Deckel vorgesehen, der mit dem Beschlagoberteil verbunden ist und die Verriegelungsvorrichtung abdeckt. Der Einstellbeschlag ist mit seinen zwei relativ zueinander verdrehbaren Beschlagteilen vorzugsweise einerseits fest mit dem Rastelement und andererseits fest mit dem Beschlagunterteil verbunden. Damit kann die Freischwenkeinheit als vormontierte Baugruppe hergestellt und geprüft werden. Wird hierauf kein Wert gelegt, kann das Rastelement am nicht-sitzteilfesten Beschlagteil des Einstellbeschlags angeformt sein.
Zum Entriegeln der Klinke ist vorzugsweise eine Entriegelungswelle vorgesehen, deren Drehung um ihre eigene Achse vorzugsweise das Fangelement von der Klinke wegschwenkt. Das Spannelement ist vorzugsweise mit einem Leerweg auf Mitnahme gekoppelt, beispielsweise mittels einer Schlitz-Zapfen-Führung, so dass es letztendlich auch durch die sich drehende Entriegelungswelle von der Klinke weggeschwenkt wird, damit diese entriegelt. Für die Lagerung der Entriegelungswelle und des Spannelements ist eine Lagerbuchse vorgesehen. Die bevorzugte Lagerung der Entriegelungswelle innen in der Lagerbuchse und des Spannelements außen auf der Lagerbuchse hat den Vorteil, dass mit Beginn der Drehung der Entriegelungswelle das Spannelement nicht versehentlich bereits mitgenommen wird, beispielsweise aufgrund von Reibung, sondern erst, wenn der Leerweg durchfahren ist. Außerdem kann, wenn im Crashfall das Spannelement weggeschwenkt werden sollte, das Fangelement unbeeinflusst in seiner Position bleiben.

Die Festlegeklinke wirkt zum Festlegen des Beschlagoberteils mit einem Anschlag am Beschlagunterteil zusammen. Dies erleichtert die Ankopplung an den Längseinsteller. Der Anschlag ist vorzugsweise derjenige zur Begrenzung der Neigungseinstellung, der beispielsweise innerhalb einer Aussparung des Rastelements angeordnet ist. Die doppelte Funktion erspart ein weiteres Bauteil.
Die Festlegeklinke liegt in der Gebrauchsstellung vorzugsweise an einem Bauteil der Freischwenkeinheit an, beispielsweise dem Rastelement oder einem Schaltring, was für die Freischwenkeinheit als vormontierte Baugruppe von Vorteil ist.

Während des Freischwenkens der Lehne kann die Festlegeklinke beim Erreichen des Anschlags mit der weiteren Schwenkbewegung der Lehne leicht aufschwenken und auf der Unterseite des Anschlags entlang gleiten, bis sie nach dem Passieren des Anschlags den Anschlag hintergreift. Es sind aber auch andere Möglichkeiten des Zusammenwirkens von Festlegeklinke und Anschlag möglich. Die Festlegeklinke und der Anschlag wirken vorzugsweise außerhalb des Selbsthemmungsbereichs zusammen. Eine Vorspannung kann für ein kraftschlüssiges Zusammenwirken sorgen. Damit ist jeweils sichergestellt, dass die Festlegeklinke durch eine Relativbewegung von Beschlagoberteil und Anschlag und/oder oberhalb einer Grenzkraft öffnet.

Die Festlegeklinke wird vorzugsweise von einem Schalthebel gesichert, der vorzugsweise vorgespannt ist. Das Sichern kann formschlüssig oder kraftschlüssig erfolgen. Die durch den Schalthebel gesicherte Festlegeklinke kann geöffnet werden, indem das Zusammenwirken der Festlegeklinke und des Schalthebels aufgehoben wird, beispielsweise indem der Schalthebel von der Festlegeklinke weggeschwenkt wird. Dies kann bei Vorliegen bestimmter Bedingungen automatisch erfolgen, beispielsweise bei einer bestimmten Sitzlängsposition, so dass die Lehne dann in ihre Ausgangsposition zurückgeschwenkt werden kann.

Mittels eines drehbaren Schaltrings, welcher bei Betätigung des Freischwenk-Bedienelementes das Zusammenwirken der Festlegeklinke und des Schalthebels aufhebt, kann die Festlegung manuell beendet werden. Die Drehung des Schaltrings wird beispielsweise durch das Fangelement bewirkt, wofür diese beiden Bauteile vorzugsweise Vorsprünge mit geeignet anwachsenden Flanken aufweisen. Der gedrehte Schaltring wirkt vorzugsweise mittels einer Schaltkontur auf den Schalthebel ein, um diesen von der Festlegeklinke zu entfernen.

Die Erfindung ist vorzugsweise bei längseinstellbaren Fahrzeugsitzen von zweitürigen Kraftfahrzeugen mit zentrischem Freischwenken der Lehne einsetzbar, kann aber auch für andere Fahrzeugsitze verwendet werden. Bei einer Verwendung des erfindungsgemäßen Beschlags zur Aktivierung der sogenannten "Easy-Entry-Funktion", bei welcher außer einem Freischwenken der Lehne noch ein Verfahren des Fahrzeugsitzes erfolgt, kann das Zurückschwenken der Lehne genau bei Erreichen der zuvor eingestellten Sitzlängsposition erfolgen.

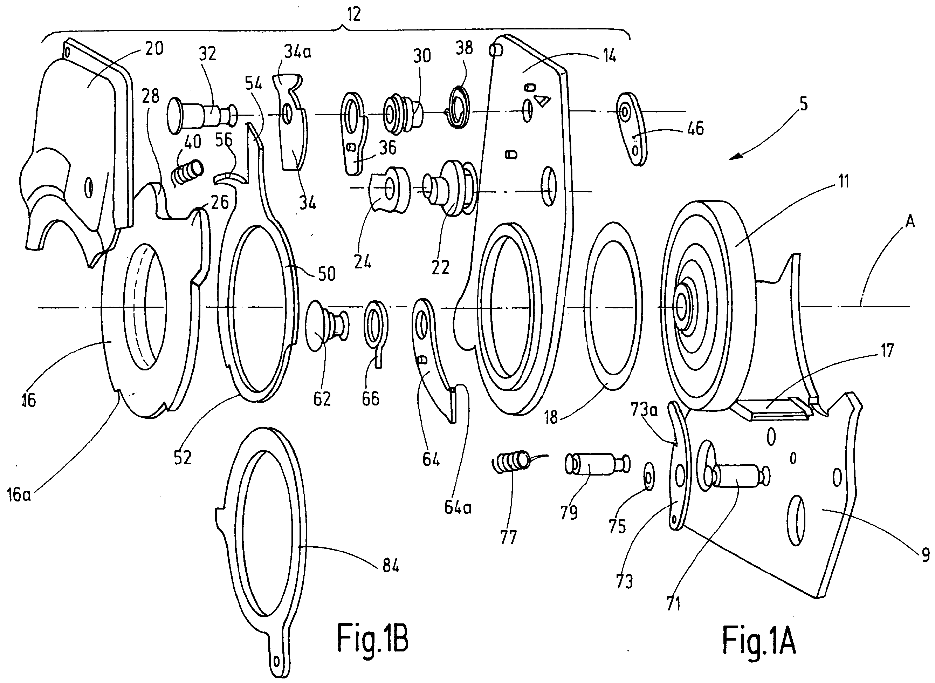

Im Folgenden ist die Erfindung anhand eines in der Zeichnung dargestellten Ausführungsbeispiels näher erläutert. Es zeigen
- Fig. 1A: eine Explosionsdarstellung des Ausführungsbeispiels ohne Seilzüge,
- Fig. 1B: eine perspektivische Ansicht eines Entriegelungsrings,

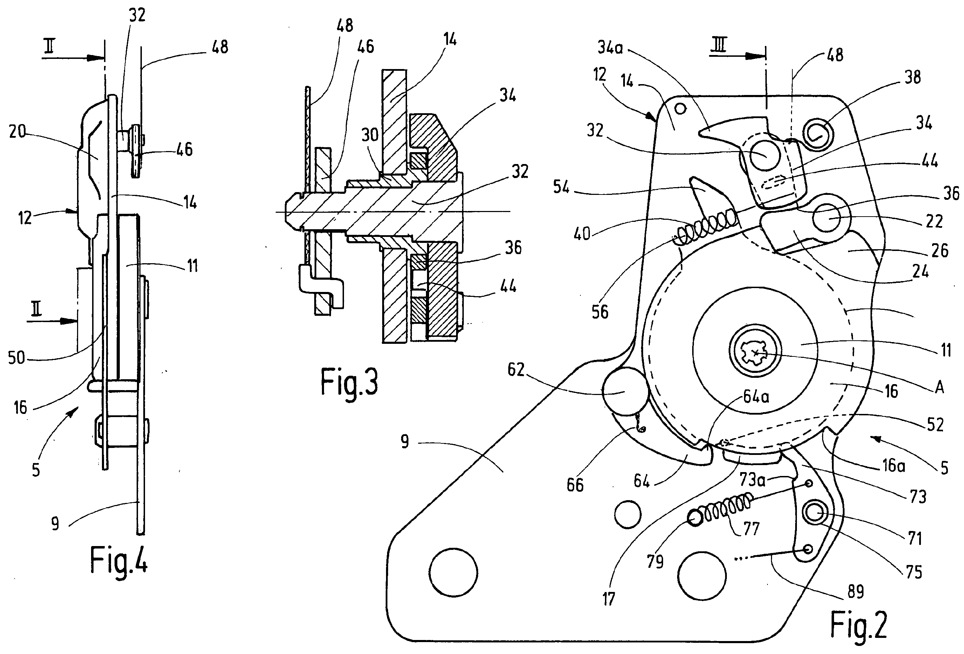

- Fig. 2: einen Schnitt durch das Ausführungsbeispiel entlang der Linie II-II in Fig. 4 in einer Gebrauchsstellung in einem verriegelten Zustand,
- Fig. 3: einen Schnitt durch den oberen Teil des Ausführungsbeispiels entlang der Linie III-III in Fig. 4,
- Fig. 4: eine seitliche Ansicht des Ausführungsbeispiels,

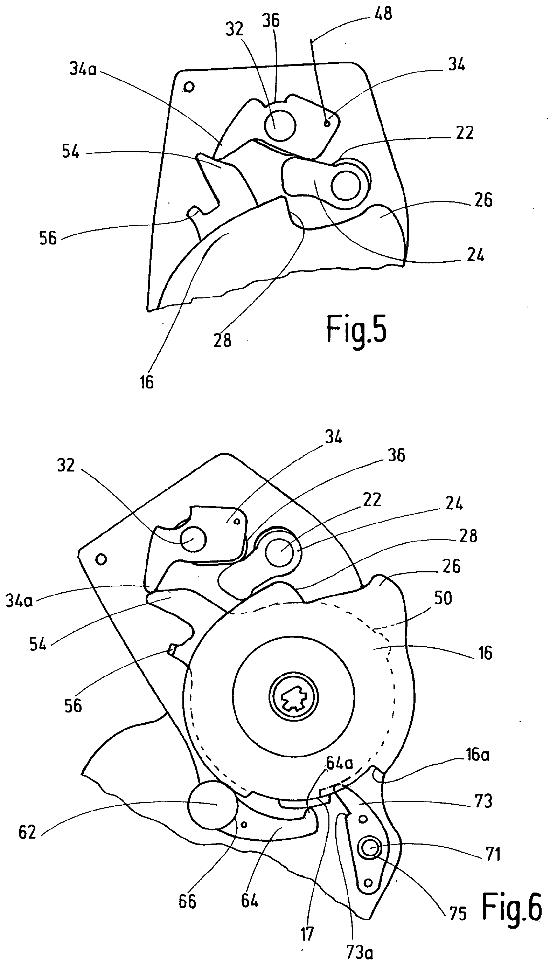

- Fig. 5: einen Teil eines Schnitts durch das Ausführungsbeispiel beim Entriegeln für ein Freischwenken der Lehne,
- Fig. 6: einen Teil eines Schnitts durch das Ausführungsbeispiel während des Freischwenkens der Lehne,

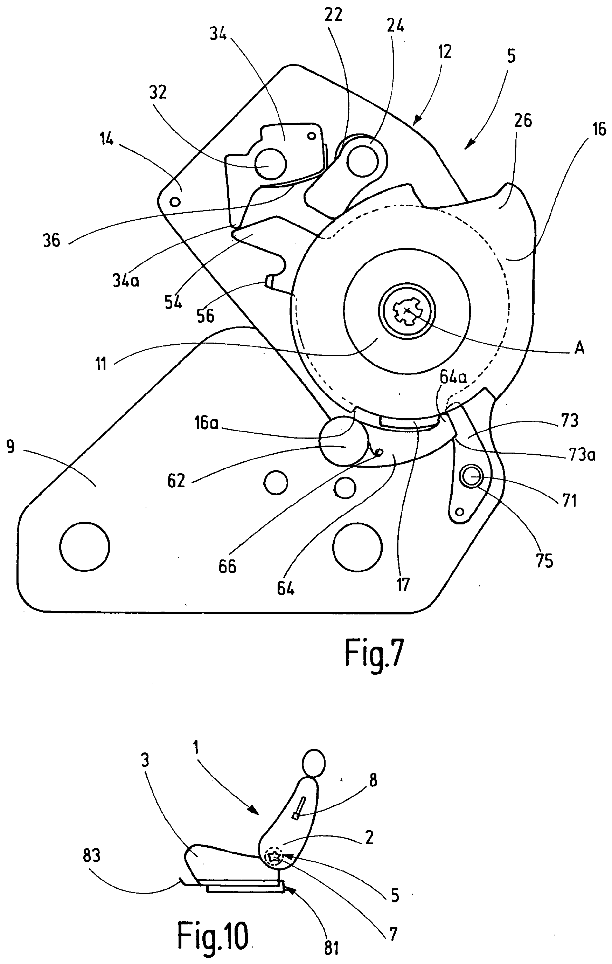

- Fig. 7: einen Schnitt durch das Ausführungsbeispiel entsprechend Fig. 2 in einem festgelegten Zustand in der freigeschwenkten Stellung der Lehne,

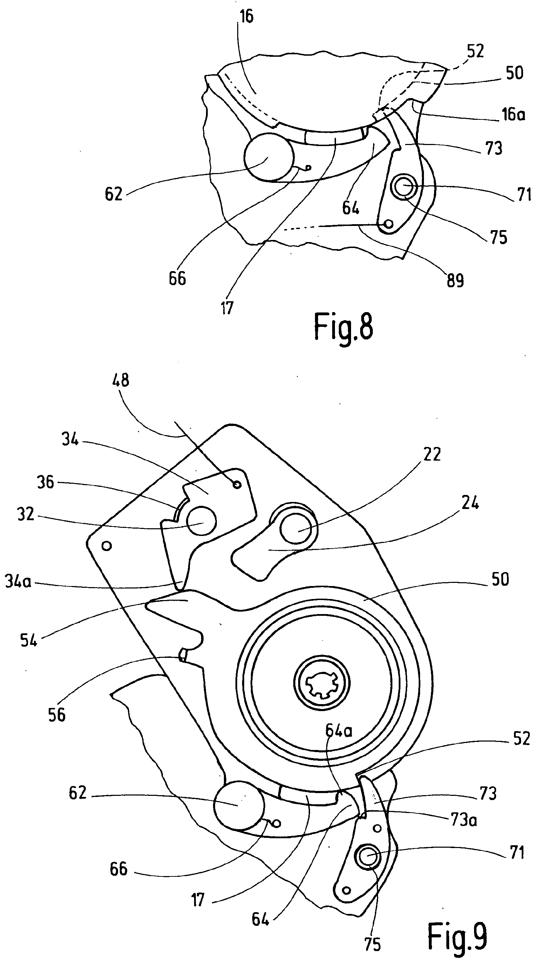

- Fig. 8: einen Teil eines Schnitts durch das Ausführungsbeispiel beim automatischen Öffnen der Festlegung mittels des Längseinstellers,
- Fig. 9: einen Teil eines Schnitts durch das Ausführungsbeispiel beim manuellen Öffnen der Festlegung mittels des Freischwenk-Bedienelements, wobei das Rastelement nicht dargestellt ist,
- Fig. 10: eine schematische Seitenansicht eines Fahrzeugsitzes,
- Fig. 11: eine Seitenansicht des Ausführungsbeispiels entsprechend Fig. 7 ohne Rastelement in einem festgelegten Zustand in der freigeschwenkten Stellung der Lehne, wobei der Einstellbeschlag eine obere Position in seiner Taumelschleife einnimmt, und
- Fig. 12: eine Seitenansicht des Ausführungsbeispiels entsprechend Fig. 11, wobei der Einstellbeschlag eine untere Position in seiner Taumelschleife einnimmt.

Ein Fahrzeugsitz 1 für ein zweitüriges Kraftfahrzeug weist für die Neigungseinstellung, d.h. die langsame, feine Winkeländerung zwischen mehreren Gebrauchsstellungen, und das Freischwenken, d.h. die schnelle, große Winkeländerung von einer Gebrauchsstellung in eine freigeschwenkte Stellung als einer speziellen Nichtgebrauchsstellung, seiner Lehne 2 relativ zu seinem Sitzteil 3 auf seinen beiden Seiten je einen Beschlag 5 auf. Auf der Außenseite des Fahrzeugsitzes 1 ist für die Neigungseinstellfunktion an einem der Beschläge 5 ein Handrad 7 und zwischen beiden Beschlägen 5 eine mit dem Handrad 7 verbundene Welle vorgesehen, während für die Freischwenkfunktion an der Lehne 2 ein Freischwenk-Bedienelement 8, beispielsweise ein Handhebel, beweglich angebracht ist.

Jeder Beschlag 5 umfasst ein Beschlagunterteil 9, das zur Befestigung des Beschlags 5 an der Struktur des Sitzteils 3 dient ("sitzteilfest"), einen Lehnenneigungseinstellbeschlag, im folgenden kurz als Einstellbeschlag 11 bezeichnet, und eine Freischwenkeinheit 12, welche ihrerseits ein Beschlagoberteil 14 aufweist, das zur Befestigung des Beschlags 5 an der der Struktur der Lehne 2 dient ("lehnenfest").
Der Einstellbeschlag 11 ist in baulicher Hinsicht als eine scheibenförmige Einheit ausgebildet, wie sie beispielsweise in der DE 101 05 282 B4 beschrieben ist.

Der Einstellbeschlag 11 weist zwei Beschlagteile auf, die relativ zueinander verdrehbar sind und mittels eines Umklammerungsrings in axialer Richtung zusammengehalten werden. Im Ausführungsbeispiel ist der Einstellbeschlag 11 als Getriebebeschlag ausgebildet, d.h. die beiden Beschlagteile des Einstellbeschlags 11 stehen mittels eines - vorliegend selbsthemmenden - Exzenterumlaufgetriebes miteinander in Getriebeverbindung, welches vorliegend ein spielfreies Feststellen der beiden Beschlagteile des Einstellbeschlags 11 ermöglicht und zum stufenlosen Verstellen eine Relativdrehung der beiden Beschlagteile des Einstellbeschlags 11 mit überlagerter Taumelbewegung erzwingt. Der Weg dieser Taumelbewegung sei als Taumelschleife bezeichnet. Ein solcher Getriebebeschlag ist beispielsweise in der DE 44 36 101 A1 beschrieben.

Die Drehung des Handrades 7 treibt den Getriebebeschlag an. Es sind aber auch andere Getriebebeschläge und - theoretisch - auch Rastbeschläge als Einstellbeschlag 11 einsetzbar. In letzterem entriegelt eine kleine Drehung des Handrades 7 oder eines ersatzweise vorgesehenen Hebels den Rastbeschlag. Der Einstellbeschlag 11 ist mit einem seiner beiden Beschlagteile und dem Umklammerungsring fest mit dem Beschlagunterteil 9 verbunden, d.h. eines der beiden Beschlagteile des Einstellbeschlags 11 ist sitzteilfest. Hierzu weist das Beschlagunterteil 9 eine gabelförmige Aufnahme für den Einstellbeschlag 11 auf.

Die Freischwenkeinheit 12 weist eine - näherungsweise ringförmiges - Rastelement 16 auf, relativ zu welcher das Beschlagoberteil 14 um eine Achse A drehbar gelagert ist. Die Achse A und ihre Lage innerhalb des Fahrzeugsitzes 1 definieren die vorliegend verwendeten Richtungsangaben. Da die Achse A - gegebenenfalls abgesehen von der Taumelbewegung, mit der zentralen Achse des Einstellbeschlags 11 zusammenfällt, handelt es sich vorliegend um ein zentrisches Freischwenken. Ein Anschlag 17 ist am Beschlagunterteil 9 befestigt und steht von diesem axial ab. Das Rastelement 16 weist an einem Teil seines Umfangs eine radial nach innen versetzte, durch je eine Stufe begrenzte Aussparung 16a auf, innerhalb derer der Anschlag 17 angeordnet ist. Durch Zusammenwirken des Anschlags 17 mit den Stufen des Rastelements 16 wird der Winkel für die Neigungseinstellung der Lehne 2 begrenzt. Das Rastelement 16 (und damit die Freischwenkeinheit 12) ist fest mit demjenigen der beiden Beschlagteile des Einstellbeschlags 11 verbunden, dass nicht sitzteilfest ist. Die Verbindung der Freischwenkeinheit 12 mit dem Einstellbeschlag 11 erfolgt beispielsweise durch Laserschweißen.

Für die Lagerung des Beschlagoberteils 14 weist das Rastelement 16 vorliegend einen bezüglich der Achse A axial abstehenden Kragen auf, auf welchem das Beschlagoberteil 14 drehbar gelagert ist. Das Beschlagoberteil 14 weist ebenfalls einen Kragen auf, der zum Rastelement 16 hin absteht, so dass zwischen Rastelement 16 und Beschlagoberteil 14 ein Bauraum vorhanden ist. Eine Haltescheibe 18 dient als axiale Sicherung des Beschlagoberteils 14. Die als Ringscheibe ausgebildete Haltescheibe 18 wird nach dem Aufsetzen des Beschlagoberteils 14 auf den Kragen des Rastelements 16 mit dem Rastelement 16 verbunden, wobei sie das Beschlagoberteil 14 hintergreift. Ein mit dem Beschlagoberteil 14 verbundener Deckel 20 definiert einerseits einen Bauraum zwischen sich und dem über das Rastelement 16 nach oben überstehenden Beschlagoberteil 14. Anderseits ist der untere Rand des Deckels 20 als Halteklammer ausgebildet und übergreift, gegebenenfalls unter Zwischenlage eines Gleiters, z.B. aus Kunststoff, das Rastelement 16. Der Deckel 20 dient somit als weitere axiale Sicherung des Beschlagoberteils 14.

Auf dem Beschlagoberteil 14 ist mittels eines Lagerbolzens 22 eine Klinke 24 schwenkbar gelagert, welche mit dem Rastelement 16 verriegelbar ist. Der zur Achse A parallele Lagerbolzen 22 begrenzt zugleich die Schwenkbewegung des Beschlagoberteils 14 nach hinten, und zwar sowohl im Normalfall als auch im (Heck-)Crashfall, indem er an einem ersten Rastanschlag 26 des Rastelements 16 anliegt. Zum Verriegeln der Klinke 24 und zur Begrenzung der Schwenkbewegung des Beschlagoberteils 14 nach vorne im (Front-)Crashfall ist in radialer Verlängerung der Klinke 24 am Rastelement 16 ein zweiter Rastanschlag 28 vorgesehen. Die Klinke 24 verriegelt mit dem Rastelement 16, indem sie sich einerseits mittels des Lagerbolzens 22 am ersten Rastanschlag 26 abstützt und andererseits mit ihrem freien Ende am zweiten Rastanschlag 28 spielfrei anliegt. Die Anlage erfolgt dazu in einem Winkel außerhalb des Selbsthemmungsbereichs. Eine alternative Abstützung am ersten Rastanschlag 26 kann mittels einer Ausprägung o.ä. des Beschlagoberteils 14 erfolgen. Beide Rastanschläge 26 und 28 sind vorliegend an dem Rastelement 16 angeformt, d.h. einstückig mit ihr ausgebildet. Der Lagerbolzen 22 ist als Exzenterbolzen ausgebildet, d.h. er ist um eine zur Schwenkachse der Klinke 24 versetzte Achse im Beschlag oberteil 14 relativ zu diesem drehbar gelagert. Zum Ausgleich der Fertigungstoleranzen ist der Lagerbolzen 22 so eingestellt und fixiert, dass die Klinke 24 mit maximalem Klinkeneingriff am zweiten Rastanschlag 28 anliegt.

Im Beschlagoberteil 14 sitzt vorzugsweise drehfest eine Lagerbuchse 30, welche beispielsweise in eine Öffnung des Beschlagoberteils 14 eingenietet oder eingeschweißt ist. Eine Entriegelungswelle 32 ist mittels dieser Lagerbuchse 30 parallel zur Achse A und zum Lagerbolzen 22 drehbar gelagert. Auf der Entriegelungswelle 32 sitzt drehfest oder mit der Entriegelungswelle 32 einteilig ausgebildet ein Fangelement 34, während ein - axial benachbart zum Fangelement 34 angeordnetes - Spannelement 36 schwenkbar auf der Lagerbuchse 30 gelagert ist. Somit ist die Entriegelungswelle 32 innen in der Lagerbuchse 30 und das Spannelement 36 außen auf der Lagerbuchse 30 gelagert. Das Fangelement 34 und das Spannelement 36 sind bei verriegeltem Beschlagoberteil 14 auf die Klinke 24 ausgerichtet. Die Funktionsweise von Fangelement 34 und Spannelement 36 ist in der DE 44 39 644 A1 beschrieben.

Das Spannelement 36 liegt mit einer exzentrisch zur Entriegelungswelle 32 gekrümmten Spannfläche in einem Winkel außerhalb des Selbsthemmungsbereichs an einer Anlagefläche der Klinke 24 an. Das Spannelement 36 wird von einer als Spiralfeder ausgebildeten Spannfeder 38 beaufschlagt, so dass das Spannelement 36 mit Vorspannung an der Klinke 24 anliegt. Dadurch ist das Beschlagoberteil 14 spielfrei mit dem Rastelement 16 verriegelt. Das Fangelement 34 wird von einer als Schrauben-Zugfeder ausgebildeten Fangfeder 40 beaufschlagt. Das Fangelement 34 und das Spannelement 36 sind miteinander mittels einer Schlitz-Zapfen-Führung 44 mit einem Leerweg auf Mitnahme gekoppelt. Hierfür weist das Spannelement 36 einen um die Entriegelungswelle 32 gekrümmten Schlitz auf, in welchen ein Zapfen des Fangelements 34 greift. Der Deckel 20 deckt die Klinke 24, das Fangelement 34, das Spannelement 36 und die Federn 38 und 40 ab und schützt diese vor Verschmutzung.
In den Gebrauchsstellungen wird im Normalfall, d.h. beim normalen Sitzgebrauch, die Klinke 24 durch das Spannelement 36 in ihrer Position gehalten (gesichert), und das Fangelement 34 ist in geringem Abstand (bezogen auf die Abmessungen der Klinke 24) zur Klinke 24 angeordnet, wobei es vorzugsweise an einem Anschlag des Beschlagoberteils 14 anliegt. Im Crashfall, wenn Crashkräfte auf die Klinke 24 wirken, die beispielsweise ein hohes Drehmoment auf das Beschlagoberteil 14 ausüben, kann das Spannelement 36 wegen der fehlenden Selbsthemmung öffnen. Nach einer sehr geringfügigen Schwenkbewegung der Klinke 24 gelangt diese in Anlage an das Fangelement 34. Das Fangelement 34 stüzt dann die Klinke 24 ab, welche innerhalb des Selbsthemmungsbereichs am Fangelement 34 anliegt, vorzugsweise tangential oder konzentrisch und möglichst flächig. Damit wird verhindert, dass die Klinke 24 öffnet. Somit verriegelt die vorbeschriebene Verriegelungsvorrichtung (bestehend aus der Klinke 24, dem Rastelement 16 als Gegenelement und dem Fangelement 34 und Spannelement 36 als Sicherungselementen) das Beschlagoberteil 14 (und damit die Freischwenkeinheit 12) sowohl im Normalfall als auch im Crashfall.
Auf der vom Deckel 20 abgewandten Seite des Beschlagoberteils 14 ist mit der Entriegelungswelle 32 ein Entriegelungshebel 46 drehfest verbunden, an welchem ein mit dem Freischwenk-Bedienelement 8 in Wirkverbindung stehender erster Seilzug 48 befestigt ist. Alternativ kann die Entriegelungswelle 32 auch über einen elektrischen Aktuator, beispielsweise einen Stellmotor oder dergleichen, betätigt werden. Zum Entriegeln des Beschlagoberteils 14 mittels des Freischwenk-Bedienelements 8 wird mittels des ersten Seilzugs 48 (und des Entriegelungshebels 46) die Entriegelungswelle 32 um ihre eigene Achse gedreht. Die Entriegelungswelle 32 nimmt das drehfest mir ihr verbundene Fangelement 34 mit, welches mittels der Schlitz-Zapfen-Führung 44 - nach Durchfahren des Leerwegs - das Spannelement 36 mitnimmt und dabei öffnet, d.h. das Spannelement 36 von der Klinke 24 trennt und entfernt. Die Klinke 24 ist dadurch freigegeben und kann wegen der fehlenden Selbsthemmung selbsttätig öffnen. In abgewandelter Ausführung kann das Fangelement 34 in Anlage an einen Entriegelungsfinger der Klinke 24 gelangen und diese mit der weiteren Schwenkbewegung aufziehen.
Im vorliegenden Ausführungsbeispiel sind die beiden Beschläge 5 auf den beiden Fahrzeugsitzseiten leicht unterschiedlich ausgebildet. Im Folgenden ist die Freischwenkeinheit 12 des Beschlags 5 auf der einen Fahrzeugsitzseite weiter beschrieben.

Bei diesem Beschlag 5 ist am Beschlagoberteil 14, insbesondere auf dessen Kragen (oder sonstigen Absatz), (oder wahlweise am Rastelement 16) konzentrisch zur Achse A ein Schaltring 50 drehbar gelagert. Der Schaltring 50 ist in axialer Richtung zwischen dem Rastelement 16 und dem Beschlag oberteil 14 (d.h. innerhalb des oben genannten Bauraums) angeordnet. Der Schaltring 50 weist eine Schaltkontur 52 auf, vorliegend eine radial vorspringende Stufe, die im unteren Bereich des Beschlagoberteils 14 angeordnet ist. Der Schaltring 50 weist ferner einen radial abstehenden Schaltfinger 54 und eine ebenfalls radial abstehende Federeinhängung 56 auf, welche beide im oberen Bereich des Beschlagoberteils 14 angeordnet sind. An der Federeinhängung 56 ist das andere Ende der Fangfeder 40 eingehängt. Der Schaltfinger 54 befindet sich im Schwenkbereich des Fangelements 34, welches vorzugsweise einen radial abstehenden Betätigungsarm 34a zum Zusammenwirken mit dem Schaltfinger 54 aufweist. Am Beschlagoberteil 14 ist mittels eines Festlegebolzens 62 eine Festlegeklinke 64 schwenkbar gelagert. Die Festlegeklinke 64 ist mittels einer Festlegefeder 66 gegen den Schaltring 50 vorgespannt und liegt mit ihrem freien Ende innerhalb der Aussparung 16a am Schaltring 50 oder am Anschlag 17 an. Die letztgenannte Anlagemöglichkeit tritt in Abhängigkeit der mit dem Einstellbeschlag 11 eingestellten Neigung der Lehne 2 und gegebenenfalls der Taumelbewegung zwischen den Beschlagteilen des Einstellbeschlags 11 auf.

An dem auf dieser Fahrzeugsitzseite vorgesehenen Beschlagunterteil 9 ist in der Nachbarschaft des Anschlags 17 mittels eines zur Achse A parallelen Schaltbolzens 71 ein Schalthebel 73 schwenkbar gelagert. Eine Sicherungsscheibe 75 sichert den Schalthebel 73 auf dem Schaltbolzen 71. Eine als Schrauben-Zugfeder ausgebildete Schaltfeder 77 ist einerseits am Schalthebel 73 eingehängt und andererseits am Beschlagunterteil 9 befestigt, beispielsweise an einem Federbolzen 79 eingehängt, welcher vom Beschlagunterteil 9 parallel zum Schaltbolzen 71 absteht. Die Schaltfeder 77 spannt den Schalthebel 73 gegen den Anschlag 17 vor, wobei das freie Ende des Schalthebels 73 in direkter Nachbarschaft des Schaltrings 50 angeordnet ist.

Der Fahrzeugsitz 1 ist mittels eines Längseinstellers 81 längseinstellbar, d.h. in der Sitzlängsposition einstellbar. Der zwei Sitzschienenpaare aufweisende Längseinsteller 81 ist hierfür mittels eines Griffs 83 entriegelbar und verriegelt selbsttätig nach Loslassen des Griffs 83. Der Längseinsteller 81 wird aber auch beim Freischwenken der Lehne 2 entriegelt, so dass der Fahrzeugsitz 1 (mittels des Längseinstellers 81) nach vorne verfahrbar ist, um zusätzlich zum Freischwenken der Lehne 2 den Zugang zum Fond zu erleichtern. Das Entriegeln des Längseinstellers 81 erfolgt dabei direkt mittels des Freischwenk-Bedienelements 8 oder indirekt, indem beim Beschlag 5 auf der Fahrzeugsitzseite ohne Schaltring 50 anstelle desselben ein Entriegelungsring 84 vorsehen ist, welcher in an sich bekannter Weise beim Vorschwenken der Lehne 2 mitgenommen wird und dann mittels eines Bowdenzugs oder dergleichen die Verriegelung des Längseinstellers 81 ansteuert.

Eine Memoryvorrichtung des Längseinstellers 81, mittels welcher die vor dem Freischwenken eingestellte Sitzlängsposition (Memory-Position) auffindbar ist, steht mittels eines zweiten Seilzugs 89, vorzugsweise eines Bowdenzugs, in Wirkverbindung mit dem Beschlag 5, welcher den Schaltring 50 aufweist. Der zweite Seilzug 89 ist an einem Arm des Schalthebels 73 befestigt, d.h. die Memoryvorrichtung des Längseinstellers 81 steuert den Schalthebel 73 an, um die Festlegeklinke 64 freigeben zu können.

Das Freischwenken der Lehne 2, welches mittels des Freischwenk-Bedienelementes 8 ausgelöst wird, beginnt mit dem Entriegeln des Beschlagoberteils 14 auf beiden Fahrzeugsitzseiten. Die Klinke 24 wird auf die zuvor beschriebene Weise radial aus dem zweiten Rastanschlag 28 des Rastelements 16 ausgehoben. Mit der Schwenkbewegung der Lehne 2 nach vorne gleitet die Festlegeklinke 64 mit ihrem freien Ende am Schaltring 50 entlang und erreicht dann den Anschlag 17. Eine schräge Kontur an der Festlegeklinke 64 sorgt dafür, dass die in Anlage an den Anschlag 17 gekommene Festlegeklinke 64 mit der weiteren Schwenkbewegung der Lehne 2 leicht aufschwenkt und auf der Unterseite des Anschlags 17 entlang gleitet.
Nach dem Passieren des Anschlags 17 springt für die Festlegeklinke 64 die Anlagekontur radial zurück. Durch ihre Vorspannung fällt die Festlegeklinke 64 nun hinter dem Anschlag 17 (radial nach innen) ein und hintergreift diesen mit einer Festlegeklinkenkontur 64a, und zwar außerhalb der Selbsthemmung. Dabei verdrängt sie den Schalthebel 73, welcher wiederum mit einer entsprechenden Schalthebelkontur 73a seinerseits die Festlegeklinke 64 hintergreift und vorzugsweise formschlüssig sichert. Die Schwenkbewegung der Lehne 2 ist beendet und das Beschlagoberteil 14 (und damit die Lehne 2) festgelegt. Die vorgeschwenkte Lehne 2 befindet sich nun in der freigeschwenkten Stellung, welche einen ungehinderten Zugang zum Fond erlaubt. Zugleich befindet sich der Fahrzeugsitz 1 in einer vorderen Sitzlängsposition.
Um in die zuvor eingenommene Gebrauchsstellung zurückzukehren, wird zunächst der Fahrzeugsitz 1 wieder nach hinten verfahren, beispielsweise durch Zug an der Lehne 2. Wenn die Memory-Position erreicht ist, verriegelt der Längseinsteller 81 und zieht dabei am zweiten Seilzug 89. Der zweite Seilzug 89 schwenkt nun den Schalthebel 73, welcher die Festlegeklinke 64 freigibt. Die Lehne 2 öffnet durch den Beginn ihre Rückwärts-Schwenkbewegung die Festlegeklinke 64 und kann dann ungehindert zurückgeschwenkt werden. Die Klinke 24 gelangt dann wieder zum zweiten Rastanschlag 28 und fällt bei Erreichen der zuvor eingenommenen Gebrauchsstellung wieder hinter dem zweiten Rastanschlag 28 (radial nach innen) ein, so dass das Beschlagoberteil 14 und damit der Beschlag 5 wieder verriegelt ist. Der vom zweiten Seilzug 89 nicht weiter beaufschlagte Schalthebel 73 wird von der zugeordneten Schaltfeder 77 wieder in seine Ausgangsposition zurückgezogen.

Wenn die Memory-Position nicht erreicht wird, beispielsweise aufgrund von Gegenständen im Fußraum, kann - statt dem zuvor beschriebenen automatischen Öffnen - die Festlegung der Lehne 2 mittels des Freischwenk-Bedienelements 8 manuell geöffnet werden. Hierbei wird mittels des ersten Seilzugs 48 die Entriegelungswelle 32 gedreht, welche das Fangelement 34 schwenkt. Das Fangelement 34 drückt mittels seines Betätigungsarms 34a auf den Schaltfinger 54 des Schaltrings 50. Aufgrund einer dort vorgesehenen Schräge wird der Schaltring 50 gedreht, wodurch die Schaltkontur 52 in Anlage an den Schalthebel 73 kommt und diesen öffnet. Der Schalthebel 73 gibt dadurch die Festlegeklinke 64 frei. Wie zuvor beschrieben, kann nun die Lehne 2 zurückgeschwenkt werden.

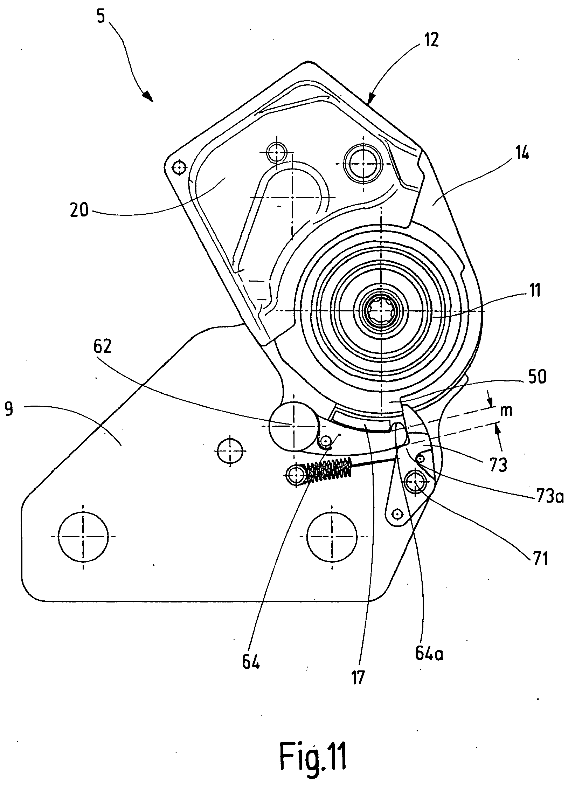

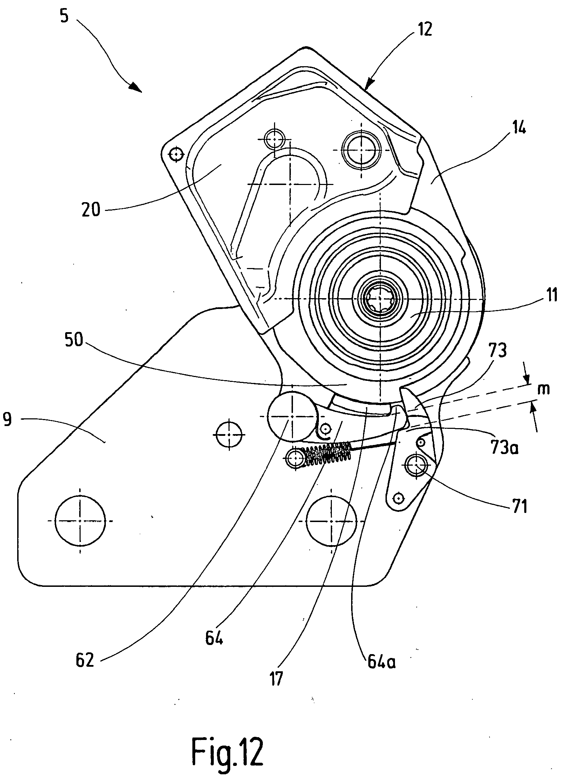

Das Festlegen des Beschlagoberteils 14 mittels der Festlegeklinke 64 in der freigeschwenkten Stellung der Lehne 2 ist vorliegend so ausgelegt, dass die Taumelschleife des Einstellbeschlags 11 keinen Einfluss hat. Wie aus den Fig. 11 und 12 ersichtlich ist, nimmt der Festlegebolzen 62 aufgrund der Taumelschleife zwar unterschiedliche Positionen relativ zum Anschlag 17 ein. Jedoch wirkt sich dies für die Anlage der Festlegeklinke 64 am Anschlag 17 und für die Anlage des Sperrhebels 73 an der Festlegeklinke 64 nur im Winkel aus, was durch eine geeignete Ausformung der Festlegeklinkenkontur 64a und der Sperrhebelkontur 73a ausgeglichen wird. Letztendlich ergibt sich immer das gleiche Schließmaß m, d.h. der Abstand zwischen den beiden Anlagestellen (Festlegeklinke - Anschlag, Sperrhebel - Festlegeklinke) ist konstant.

### Bezugszeichenliste

- 1: Fahrzeugsitz
- 2: Lehne
- 3: Sitzteil
- 5: Beschlag
- 7: Handrad
- 8: Freischwenk-Bedienelement
- 9: Beschlagunterteil
- 11: Einstellbeschlag
- 12: Freischwenkeinheit
- 14: Beschlagoberteil
- 16: Rastelement
- 16a: Aussparung
- 17: Anschlag
- 18: Haltescheibe
- 20: Deckel
- 22: Lagerbolzen
- 24: Klinke
- 26: erster Rastanschlag
- 28: zweiter Rastanschlag
- 30: Lagerbuchse
- 32: Entriegelungswelle
- 34: Fangelement
- 34a: Betätigungsarm
- 36: Spannelement
- 38: Spannfeder
- 40: Fangfeder
- 44: Schlitz-Zapfen-Führung
- 46: Entriegelungshebel
- 48: erster Seilzug
- 50: Schaltring
- 52: Schaltkontur
- 54: Schaltfinger
- 56: Federeinhängung
- 62: Festlegebolzen
- 64: Festlegeklinke
- 64a: Festlegeklinkenkontur
- 66: Festlegefeder
- 71: Schaltbolzen
- 73: Schalthebel
- 73a: Schalthebelkontur
- 75: Sicherungsscheibe
- 77: Schaltfeder
- 79: Federbolzen
- 81: Längseinsteller
- 83: Griff
- 84: Entriegelungsring
- 89: zweiter Seilzug
- A: Achse
- m: Schließmaß

## Patentansprüche

1. Beschlag für einen Fahrzeugsitz, insbesondere für einen Kraftfahrzeugsitz, mit einem Einstellbeschlag (11) zur Neigungseinstellung einer Lehne (2) des Fahrzeugsitzes (1) relativ zu einem Sitzteil (3) des Fahrzeugsitzes, einer Freischwenkeinheit (12) zum zentrischen Freischwenken der Lehne (2) von wenigstens einer Gebrauchsstellung in eine freigeschwenkte Stellung, was mittels eines Freischwenk-Bedienelementes (8) ausgelöst wird, einem Beschlagunterteil (9), das mit dem Sitzteil (3) zu verbinden ist und das den Einstellbeschlag (11) trägt, einem der Freischwenkeinheit (12) zugeordneten Beschlagoberteil (14), das mit der Lehne (2) zu verbinden ist und das in der Gebrauchsstellung verriegelt ist, einer Festlegeklinke (64), die schwenkbar am Beschlagoberteil (14) angelenkt ist und die das Beschlagoberteil (14) in der freigeschwenkten Stellung der Lehne (2) am Beschlagunterteil (9) festlegt, wobei die Festlegeklinke (64) dann mittels des Freischwenk-Bedienelements (8) und auch mittels eines Längseinstellers (81) des Fahrzeugsitzes (1) zu öffnen ist, **dadurch gekennzeichnet, dass** die Festlegeklinke (64) zum Festlegen des Beschlagoberteils (14) mit einem Anschlag (17) am Beschlagunterteil (9) zusammenwirkt, wobei zur Begrenzung der Neigungseinstellung der Lehne (2) der Anschlag (17) und ein mit dem Anschlag (17) zusammenwirkendes Rastelement (16) am Einstellbeschlag (11) vorgesehen sind.

2. Beschlag nach Anspruch 1, **dadurch gekennzeichnet, dass** die Freischwenkeinheit (12) eine Verriegelungsvorrichtung aufweist mit einer Klinke (24) zum Verriegeln des Beschlagoberteils (14) in der Gebrauchsstellung, einem vorgespannten Spannelement (36) zum Sichern der verriegelten Klinke (24) im Normalfall und einem Fangelement (34) zum Abstützen der Klinke (24) im Crashfall.

3. Beschlag nach Anspruch 2, **dadurch gekennzeichnet, dass** die Klinke (24) schwenkbar am Beschlagoberteil (14) angelenkt ist und dass die Freischwenkeinheit (12) ein Rastelement (16) aufweist, welches mit dem Einstellbeschlag (11) verbunden ist und mit welcher die Klinke (24) verriegelt.

4. Beschlag nach einem der vorhergehenden Ansprüche, **dadurch gekennzeichnet, dass** die Festlegeklinke (64) in der Gebrauchsstellung an einem Bauteil der Freischwenkeinheit (12) anliegt und/oder während des Freischwenkens der Lehne (2) an einem Bauteil der Freischwenkeinheit (12) entlang gleitet bis zum Erreichen des Anschlags (17).

5. Beschlag nach Anspruch 4, **dadurch gekennzeichnet, dass** die in Anlage an den Anschlag (17) gekommene Festlegeklinke (64) mit der weiteren Schwenkbewegung der Lehne (2) leicht aufschwenkt und auf der Unterseite des Anschlags (17) entlang gleitet, bis sie nach dem Passieren des Anschlags (17) den Anschlag (17) mittels einer Festlegeklinkenkontur (64a) hintergreift, insbesondere nicht-selbsthemmend.

6. Beschlag nach einem der vorhergehenden Ansprüche, **dadurch gekennzeichnet, dass** die zum Festlegen mit dem Anschlag (17) zusammenwirkende, vorzugsweise vorgespannte Festlegeklinke (64) von einem vorzugsweise vorgespannten Schalthebel (73) gesichert wird, insbesondere mittels einer Schalthebelkontur (73a).

7. Beschlag nach Anspruch 5 und 6, **dadurch gekennzeichnet, dass** die Festklinkenkontur (64a) und die Schalthebelkontur (73a) so ausgebildet sind, dass sich ein Schließmaß (m) ergibt, welches von einer Taumelbewegung des Einstellbeschlags (11) unabhängig ist.

8. Beschlag nach Anspruch 6 oder 7, **dadurch gekennzeichnet, dass** die Freischwenkeinheit einen drehbar gelagerten Schaltring (50) aufweist, welcher mittels des Freischwenk-Bedienelementes (8) drehbar ist, wobei der gedrehte Schaltring (50) mittels einer Schaltkontur (52) auf den Schalthebel (73) einwirkt, insbesondere den Schalthebel (73) öffnet.

9. Beschlag nach Anspruch 1 und 8, **dadurch gekennzeichnet, dass** das betätigte Freischwenk-Bedienelement (8), insbesondere mittels eines ersten Seilzuges (48), das Fangelement (34) schwenkt, welches auf den Schaltring (50) einwirkt, um diesen zu drehen.

10. Beschlag nach einem der Ansprüche 6 bis 9, **dadurch gekennzeichnet, dass** der Längseinsteller (81), insbesondere eine Memoryvorrichtung des Längseinstellers (81), bei Erreichen der zuvor eingestellten Sitzlängsposition, insbesondere mittels eines zweiten Seilzuges (89), auf den Schalthebel (73) einwirkt, insbesondere den Schalthebel (73) öffnet.

11. Fahrzeugsitz (1) mit einer neigungseinstellbaren und freischwenkbaren Lehne (2) und einem Längseinsteller (81), mittels dessen der Fahrzeugsitz (1) beim Freischwenken der Lehne (2) nach vorne verfahrbar ist, **gekennzeichnet durch** wenigstens einen Beschlag (5) nach einem der vorhergehenden Ansprüche zur Neigungseinstellung und zum Freischwenken der Lehne (2).

12. Fahrzeugsitz nach Anspruch 11, **dadurch gekennzeichnet, dass** der Längseinsteller (81) eine Memoryvorrichtung aufweist, welche die vor dem Freischwenken eingestellte Sitzlängsposition auffindet und dann die Festlegeklinke (64) öffnet.

## Claims

1. Fitting for a vehicle seat, in particular for a motor vehicle seat, comprising an adjustment fitting (11) for the inclination adjustment of a backrest (2) of the vehicle seat (1) relative to a seat part (3) of the vehicle seat, a free-pivoting unit (12) for the central free-pivoting of the backrest (2) from at least one position of use into a freely-pivoted position, which is triggered by means of a free-pivoting operating element (8), a fitting lower part (9), which may be connected to the seat part (3) and which carries the adjustment fitting (11), a fitting upper part (14) associated with the free-pivoting unit (12), which may be connected to the backrest (2), and which is locked in the position of use, a securing latch (64) which is pivotably articulated to the fitting upper part (14) and which secures the fitting upper part (14) to the fitting lower part (9) in the freely-pivoted position of the backrest (2), the securing latch (64) thus being able to be opened by means of the free-pivoting operating element (8) and also by means of a longitudinal adjuster (81) of the vehicle seat (1), **characterized in that** the securing latch (64) cooperates for securing the fitting upper part (14) with a stop (17) on the fitting lower part (9), wherein for limiting the inclination adjustment of the backrest (2) the stop (17) and a detent element (16) cooperating with the stop (17) are provided on the adjustment fitting (11).

2. Fitting according to Claim 1, **characterized in that** the free-pivoting unit (12) comprises a locking device with a latch (24) for locking the fitting upper part (14) in the position of use, a prestressed tightening element (36) for securing the locked latch (24) normally and a catch element (34) for supporting the latch (24) in the event of a crash.

3. Fitting according to Claim 2, **characterized in that** the latch (24) is pivotably articulated to the fitting upper part (14) and **in that** the free-pivoting unit (12) comprises a detent element (16) which is connected to the adjustment fitting (11) and by which the latch (24) is locked.

4. Fitting according to one of the preceding claims, **characterized in that** the securing latch (64) in the position of use bears against a component of the free-pivoting unit (12) and/or during the free-pivoting of the backrest (2) slides along a component of the free-pivoting unit (12) until reaching the stop (17).

5. Fitting according to Claim 4, **characterized in that** the securing latch (64) brought to bear against the stop (17) slightly pivots upward with the further pivoting motion of the backrest (2) and slides along the underside of the stop (17) until it engages behind the stop (17) after passing the stop (17) by means of a securing latch contour (64a), in particular in a non-self-locking manner.

6. Fitting according to one of the preceding claims, **characterized in that** the preferably prestressed securing latch (64) cooperating with the stop (17) for securing, is secured by a preferably prestressed operating lever (73), in particular by means of an operating lever contour (73a).

7. Fitting according to Claim 5 and 6, **characterized in that** the securing latch contour (64a) and the operating lever contour (73a) are configured such that a degree of closing (m) is produced, which is independent of a wobble motion of the adjustment fitting (11).

8. Fitting according to Claim 6 or 7, **characterized in that** the free-pivoting unit comprises a rotatably mounted switching ring (50), which is rotatable by means of the free-pivoting operating element (8), the rotated switching ring (50) acting on the operating lever (73) by means of a switching contour (52) in particular opening the operating lever (73).

9. Fitting according to Claim 1 and 8, **characterized in that** the actuated free-pivoting operating element (8), in particular by means of a first control cable (48), pivots the catch element (34), which acts on the switching ring (50), in order to rotate said switching ring.

10. Fitting according to one of Claims 6 to 9, **characterized in that** the longitudinal adjuster (81), in particular a memory device of the longitudinal adjuster (81), when reaching the previously set longitudinal seat position, in particular by means of a second control cable (89), acts on the operating lever (73), in particular opens the operating lever (73).

11. Vehicle seat (1) comprising a backrest (2) which is adjustable in its inclination and is freely pivotable, and a longitudinal adjuster (81) by means of which the vehicle seat (1) when freely pivoting the backrest (2) is movable to the front, **characterized by** at least one fitting (5) according to one of the preceding claims, for adjusting the inclination and for freely pivoting the backrest (2).

12. Vehicle seat according to Claim 11, **characterized in that** the longitudinal adjuster (81) comprises a memory device, which locates the longitudinal seat position set before the free-pivoting, and then opens the securing latch (64).

## Revendications

1. Ferrure pour un siège de véhicule, en particulier pour un siège de véhicule automobile, comprenant une ferrure d'ajustement (11) pour l'ajustement de l'inclinaison d'un dossier (2) du siège de véhicule (1) par rapport à une partie de siège (3) du siège de véhicule, une unité de pivotement libre (12) pour le pivotement libre central du dossier (2) depuis au moins une position d'utilisation dans une position pivotée librement, ce qui est déclenché au moyen d'un élément de commande de pivotement libre (8), une partie inférieure de ferrure (9), qui peut être connectée à la partie de siège (3) et qui porte la ferrure d'ajustement (11), une partie supérieure de ferrure (14) associée à l'unité de pivotement libre (12), qui peut être connectée au dossier (2) et qui est verrouillée dans la position d'utilisation, un cliquet de fixation (64), qui est articulé de manière pivotante à la partie supérieure de ferrure (14) et qui fixe la partie supérieure de ferrure (14) dans la position pivotée librement du dossier (2) à la partie inférieure de ferrure (9), le cliquet de fixation (64) pouvant alors être ouvert au moyen de l'élément de commande de pivotement libre (8) et également au moyen d'un dispositif d'ajustement de longueur (81) du siège de véhicule (1), **caractérisée en ce que** le cliquet de fixation (64) coopère avec une butée (17) au niveau de la partie inférieure de ferrure (9) pour fixer la partie supérieure de ferrure (14), la butée (17) et un élément d'encliquetage (16) coopérant avec la butée (17) étant prévus sur la ferrure d'ajustement (11) pour limiter l'ajustement de l'inclinaison du dossier (2).

2. Ferrure selon la revendication 1, **caractérisée en ce que** l'unité de pivotement libre (12) présente un dispositif de verrouillage avec un cliquet (24) pour verrouiller la partie supérieure de ferrure (14) dans la position d'utilisation, un élément de serrage précontraint (36) pour fixer le cliquet verrouillé (24) en situation normale et un élément de capture (34) pour supporter le cliquet (24) en cas de collision.

3. Ferrure selon la revendication 2, **caractérisée en ce que** le cliquet (24) est articulé de manière pivotante à la partie supérieure de ferrure (14) et **en ce que** l'unité de pivotement libre (12) présente un élément d'encliquetage (16) qui est connecté à la ferrure d'ajustement (11) et avec lequel le cliquet (24) se verrouille.

4. Ferrure selon l'une quelconque des revendications précédentes, **caractérisée en ce que** le cliquet de fixation (64) s'applique dans la position d'utilisation contre un composant de l'unité de pivotement libre (12) et/ou glisse le long d'un composant de l'unité de pivotement libre (12) pendant le pivotement libre du dossier (2) jusqu'à ce qu'il atteigne la butée (17).

5. Ferrure selon la revendication 4, **caractérisée en ce que** le cliquet de fixation (64) parvenu en appui contre la butée (17) pivote légèrement vers le haut avec la poursuite du mouvement de pivotement du dossier (2) et glisse le long du côté inférieur de la butée (17), jusqu'à ce qu'il s'engage par l'arrière, après avoir passé la butée (17), avec la butée (17) au moyen d'un contour de cliquet de fixation (64a), en particulier sans auto-blocage.

6. Ferrure selon l'une quelconque des revendications précédentes, **caractérisée en ce que** le cliquet de fixation (64) de préférence précontraint, coopérant pour la fixation avec la butée (17), est fixé par un levier de commutation (73) de préférence précontraint, en particulier au moyen d'un contour de levier de commutation (73a).

7. Ferrure selon les revendications 5 et 6, **caractérisée en ce que** le contour du cliquet de fixation (64a) et le contour du levier de commutation (73a) sont réalisés de telle sorte que l'on obtienne une composante de fermeture (m) qui est indépendante d'un mouvement de nutation de la ferrure d'ajustement (11).

8. Ferrure selon la revendication 6 ou 7, **caractérisée en ce que** l'unité de pivotement libre présente une bague de commutation (50) supportée à rotation, qui peut être tourné au moyen de l'élément de commande de pivotement libre (8), la bague de commutation (50) tournée agissant au moyen d'un contour de commutation (52) sur le levier de commutation (73), en particulier ouvrant le levier de commutation (73).

9. Ferrure selon les revendications 1 et 8, **caractérisée en ce que** l'élément de commande de pivotement libre actionné (8) fait pivoter l'élément de capture (34), en particulier au moyen d'un premier câble Bowden (48), lequel élément de capture agit sur la bague de commutation (50) pour la faire tourner.

10. Ferrure selon l'une quelconque des revendications 6 à 9, **caractérisée en ce que** le dispositif d'ajustement longitudinal (81), en particulier un dispositif à mémoire du dispositif d'ajustement longitudinal (81), une fois qu'il a atteint la position longitudinale du siège ajustée préalablement, agit, en particulier au moyen d'un deuxième câble Bowden (89), sur le levier de commutation (73) en particulier ouvre le levier de commutation (73).

11. Siège de véhicule (1) comprenant un dossier (2) d'inclinaison ajustable et pouvant pivoter librement et un dispositif d'ajustement longitudinal (81) au moyen duquel le siège de véhicule (1) peut être déplacé vers l'avant lors du pivotement libre du dossier (2), **caractérisé par** au moins une ferrure (5) selon l'une quelconque des revendications précédentes pour l'ajustement de l'inclinaison et pour le pivotement libre du dossier (2).

12. Siège de véhicule selon la revendication 11, **caractérisé en ce que** le dispositif d'ajustement longitudinal (81) présente un dispositif à mémoire qui trouve la position longitudinale du siège ajustée préalablement au pivotement libre et ouvre ensuite le cliquet de fixation (64).
